# EUROPEAN PATENT APPLICATION

(11) **EP 1 777 056 A1**
(43) Date of publication of application: **25.04.2007**
(21) Application number: 06255306.0
(22) Date of filing: 16.10.2006
(51) Int. Cl.: B29C 49/78, B29C 49/16

(54) **Blow moulding apparatus and method**

(30) Priority: 18.10.2005 GB 0521113
(71) Applicant: EBAC LIMITED, Bishop Auckland, County Durham DL14 9AL (GB)
(72) Inventor: Elliott, John Malcolm, Durham DL14 7QZ (GB)
(74) Representative: Craske, Stephen Allan

(57) **Abstract**

Energy-efficient apparatus for blow moulding articles from thermoplastic material includes a mould 2 defining a mould cavity 3 for receiving a heated thermoplastic parison 4. An air duct 9 connects the mould to a low pressure accumulator 10 containing air at a first moulding pressure for use in a first blowing stage, at least one intermediate accumulator 20, 30, containing air at intermediate pressures for use in intermediate blowing stages, and a high pressure accumulator 40 containing air at a final moulding pressure for use in a final blowing stage. The capacity of each of the accumulators is about ten times greater than the volume of the mould cavity. Valves 11-41 selectively control communication between each of the accumulators and the mould cavity 3 to admit air from each of the accumulators to the mould cavity in sequence during a blowing phase, and thereby expand the parison in a stepwise manner. During a recovery phase, the valves sequentially admit pressurised air from the mould cavity to the intermediate and low pressure accumulators 30-10 in turn to restore the accumulator pressures for the next moulding cycle.

## Description

### TECHNICAL FIELD OF THE INVENTION

This invention relates to a method and apparatus for blow moulding bottles and similar hollow articles.

### BACKGROUND

The manufacture of bottles, containers and similar blow moulded articles is an enormous business, with millions of articles being produced per day. Even a small energy reduction per article can result in a considerable overall cost saving.

To achieve satisfactory expansion of many blow moulded articles it is necessary to achieve blowing pressures of around 40 bar, and achieving the required amount of air compression consumes large amounts of energy. When blow moulding large articles partial expansion is sometimes carried out at a relatively low pressure in order to achieve a suitable distribution of material within the finished article, but the main part of the expansion process is normally carried out at high pressure, resulting in considerable energy consumption.

US 4 830 810 describes a method of blow moulding which involves fluorinating plastic containers. During the expansion phase a first blow moulding stage is carried out with nitrogen up to 1.5 bar followed by a second, more rapid, expansion stage up to 4 bar. There is then a short pause to check for leaks, which is followed by a third expansion stage in which pressure is increased progressively by introduction of fluorine up to 10 bar. Apart from stage 2, the three expansion stages generally involve a steady increase in pressure.

US 5 543 107 describes a process for blow moulding a closed plastic drum. Again, the blowing operation is carried out in three stages, but the first primary expansion stage is performed at 30-60 psi, the second stage is performed at a lower pressure of 15-40 psi to stabilise the article, and the third stage is carried out at a higher pressure of 90-110 psi.

US 5 622 735 relates to blow moulding of bottles. Although this involves three stepwise expansion stages there is an apparent pressure drop between the first and second stages.

The present invention seeks to provide a new and inventive method of blow moulding articles, and apparatus for carrying out the method, which can produce a significant reduction in energy useage.

### SUMMARY OF THE INVENTION

The present invention proposes apparatus for blow moulding articles from thermoplastic material, which includes a mould defining a mould cavity for a heated thermoplastic parison, and control means arranged to operate such that, in an expansion phase, air is sequentially admitted to the mould cavity in a first expansion stage at a low moulding pressure, at least one intermediate expansion stage at an intermediate moulding pressure, and a final expansion stage at a high moulding pressure, in turn, to expand the parison and thereby produce a moulded article conforming to the internal shape of the mould cavity,
***characterised in that***
the increase in pressure during each of the said expansion stages is arranged to take place in a stepwise manner.

In this context it should be noted that "stepwise manner" means that a relatively rapid change in pressure is followed by a period during which there is a relatively slow or insignificant change in pressure.

The invention also provides a process for blow moulding articles from thermoplastic material, which includes:
- introducing a parison of thermoplastic material into a mould defining a mould cavity;
- heating the parison to an expandable condition;
   and
- in an expansion phase, sequentially admitting air to the mould cavity in a first expansion stage at a low moulding pressure, at least one intermediate expansion stage at an intermediate moulding pressure, and a final expansion stage at a high moulding pressure, in turn, to expand the parison and thereby produce a moulded article conforming to the internal shape of the mould cavity,
*characterised in that*
the increase in pressure during each of the said expansion stages is arranged to take place in a stepwise manner.

### BRIEF DESCRIPTION OF THE DRAWINGS

The following description and the accompanying drawings referred to therein are included by way of non-limiting example in order to illustrate how the invention may be put into practice. In the drawings:
Figure 1 is a schematic diagram showing apparatus for blow moulding articles in accordance with the invention;
Figure 2 is a flow diagram showing the main stages of the moulding process; and
Figure 3 is a graph showing the variations in pressure which occur during the moulding process.

### DETAILED DESCRIPTION OF THE DRAWINGS

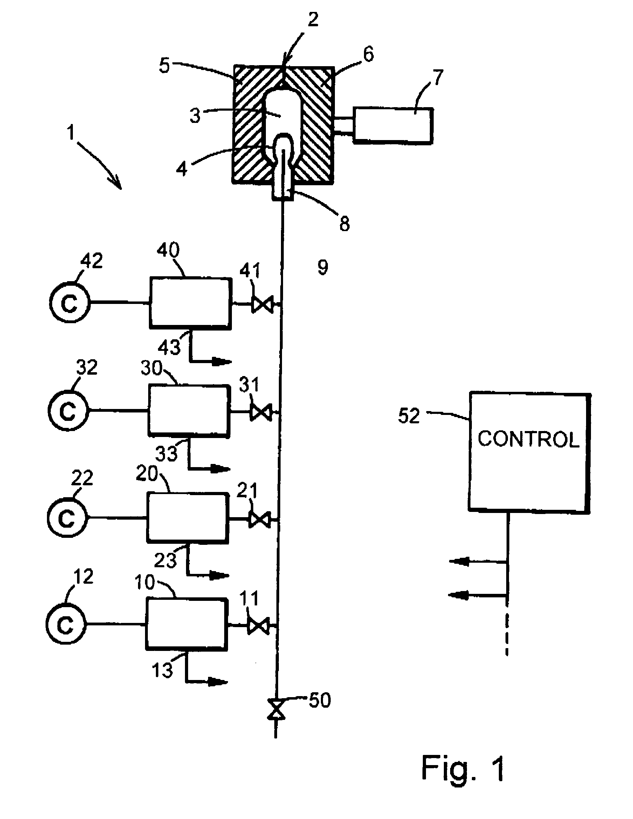

**Fig. 1** shows blow moulding apparatus 1 which includes a mould 2 defining a mould cavity 3 for receiving a parison 4 of a thermoplastic material which is suitable for blow moulding such as PET (polyethylene terephthalate). The parison may be pre-formed prior to insertion into the mould 2 and pre-heated or heated in the mould, or it may be injected directly into the mould cavity 3 in known manner. In order to remove moulded articles, the mould is formed of two or more parts, 5 and 6, which can be moved relative to each other by a ram or other displacement device 7. The parison is held by, or injected through, a mandrel 8 which is connected to a compressed air duct 9 to admit blowing air into the parison 4, causing it to expand within the mould cavity.

The duct 9 leads to four air accumulators 10, 20, 30 and 40. The internal storage volume of each accumulator is about one order of magnitude higher than that of the mould cavity 3. Thus, a mould which is designed to produce a 1 litre container will have accumulators of approximately 10 litres capacity. Although four accumulators are described in this example the number of accumulators may vary. For example, where the nature of the thermoplastic and the shape of the article being moulded allow lower blowing pressures to be used only three accumulators may be used, whereas higher blowing pressures, or a requirement for maximum energy efficiency, may make it economical to provide five or more accumulators. Each accumulator is connected to the air duct 9 via a respective control valve, 11, 21, 31 and 41. In addition, the accumulators are supplied with compressed air via a respective compressor 12, 22, 32 and 42. A vent valve 50 allows the mould cavity to be vented to atmosphere when required.

The valves, compressors and the ram 7 are all operated by a programmable electronic controller 52 which has overall control of the moulding process. The control device can also monitor the pressures within the four accumulators by means of respective pressure sensors, 13, 23, 33 and 43.

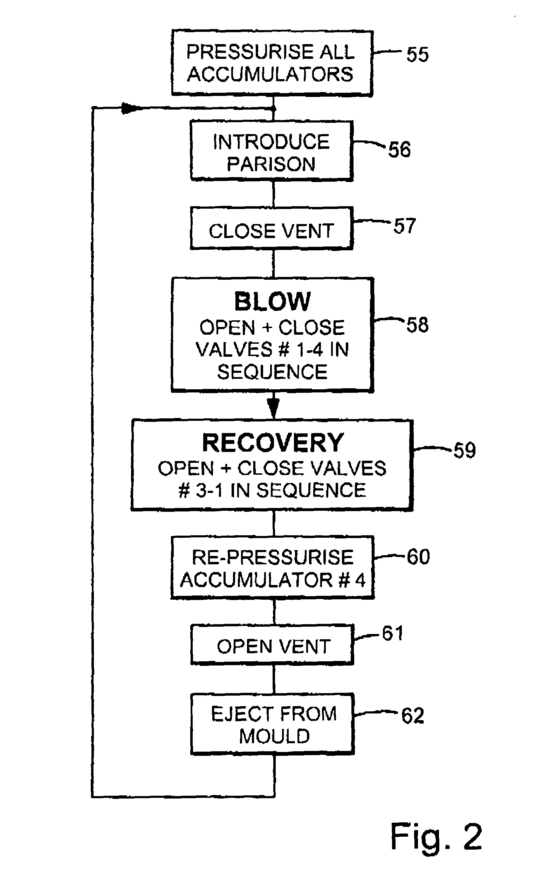

The moulding process is illustrated in **Fig. 2** by means of flow diagram showing the main stages of a single moulding cycle in the manufacture of blow moulded bottles. During startup of the moulding apparatus the valves are all closed except for the vent valve 50 which will usually be open to vent the mould cavity to atmosphere. In stage 55 the four compressors are run until the accumulators are pressurised with air at the moulding pressures required for different stages in the moulding process, as detected by the respective pressure sensors13 to 43. Accumulator 10 is filled to a moulding pressure for use in a first stage in the moulding process, typically around 10 bar. The next accumulator 20 is filled to about 20 bar, the third to about 30 bar, and the fourth accumulator is filled to the final moulding pressure, which in most cases is about 40 bar. The pressure steps not be exactly equal, although they are preferably spread evenly between atmospheric pressure and the final moulding pressure. Once the accumulators are filled to the required pressures the compressors are stopped and are only re-started if the any of the accumulator pressures should fall significantly.

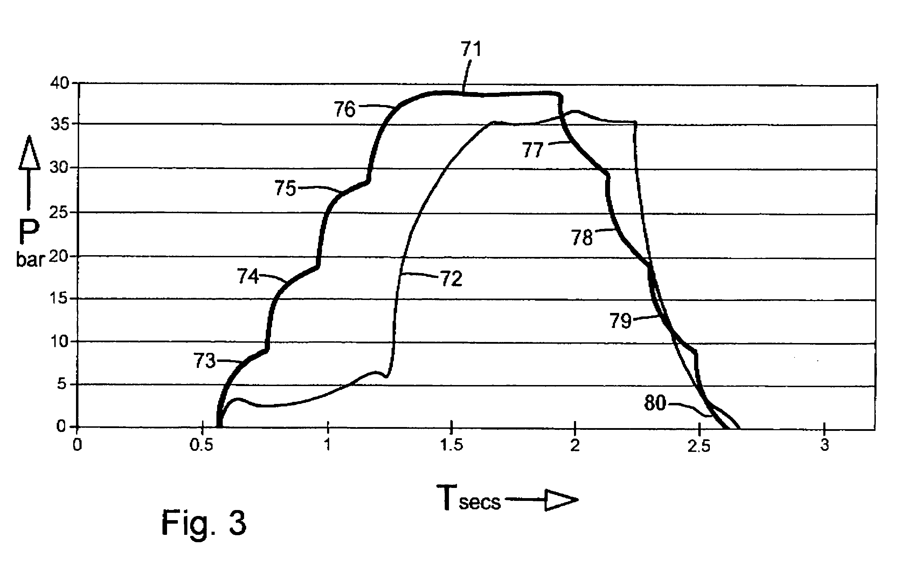

In stage 56 the parison 4 is introduced into the mould and the vent valve 50 closed at 57. In the blowing phase 58 the first valve 11 is opened to admit air pressure from the first accumulator 10 to the mould cavity via the duct 9. The curve 70 of **Fig. 3** shows the rise in pressure (vertical axis) within the present mould cavity against time (horizontal axis). For purpose of comparison, the drawing also shows the curve 72 for a conventional moulding process in which, during the expansion phase, the parison is pre-blown with low pressure air followed by a single expansion stage, and following stabilisation of the expanded component, the recovery phase is carried out by opening the mould to atmosphere. In the present process the opening of the valve 11 produces a first stepwise increase in pressure, 73. When the pressure has had time to stabilise the valve 11 is closed and the second valve 21 is opened to admit air at the next higher pressure (20 bar). This produces a second stepwise pressure increase 74 within the mould cavity, resulting in further expansion of the parison. After a further period the valve 21 is closed and the valve 31 is opened, producing a third step 75, following which the valve 31 is closed and the valve 41 is opened to admit air from the last accumulator 40 at the final moulding pressure (step 76). Each time the accumulator is opened to the mould cavity this will produce a small drop in overall pressure within the accumulator, but due to the large storage volume compared with that of the mould cavity the drop will be relatively small (e.g. 40 bar to around 39 bar). This drop is normally insufficient to cause restarting of the compressors.

When the shape of the parison has stabilised within the confines of the mould cavity the recovery phase begins (stage 59, Fig. 2). Valve 41 is closed and valve 31 is re-opened producing a stepwise fall 77 in pressure within the blown article. This will result in a slight increase in pressure within the accumulator 30 as the air from the mould cavity flows into the accumulator, approximately restoring the accumulator pressure to the previous value. This is repeated for each of the accumulators in turn (steps 78 and 79). When the final valve 11 is closed the mould cavity can be vented to atmosphere (step 80) by opening the vent valve 50 (stage 61), and the moulded article is then removed from the mould at stage 62 and a new parison is introduced (stage 56).

Over several moulding cycles the pressures within the accumulators 10 to 30 is maintained at the approximate starting figures. The pressure in the final accumulator will fall slowly, but this is replenished in due course by the compressor 42 (stage 60). The efficient recovery of moulding pressure which is thus achieved results in a significant energy saving.

The power required to initially fill the accumulators is significantly less than the power required to blow a pre-expanded parison in a single expansion stage. This is demonstrated by the following rough calculation of the energy used:

| | |
|---|---|
| 10 litres @ 10 bar = | 100 units |
| 10 litres @ 20 bar = | 200 units |
| 10 litres @ 30 bar = | 300 units |
| 10 litres @ 40 bar = | 400 units |
| | |
| TOTAL: | 1,000 units |

In contrast, providing 40 litres of air @ 40 bar requires 1,600 units of energy.

The use of separate compressors is desirable in order that the efficiency of each compressor can be optimised for the target pressure, but it would also be possible to use a single compressor in combination with a suitable valve system arranged to permit the compressor to fill each of the accumulators to the required pressure.

The pressures and volumes stated in the above description are purely exemplary.

It will be appreciated that the features disclosed herein may be present in any feasible combination. Whilst the above description lays emphasis on those areas which, in combination, are believed to be new, protection is claimed for any inventive combination of the features disclosed herein.

## Claims

1. Apparatus for blow moulding articles from thermoplastic material, which includes a mould (2) defining a mould cavity (3) for a heated thermoplastic parison (4), and control means (52) arranged to operate such that, in an expansion phase, air is sequentially admitted to the mould cavity in a first expansion stage at a low moulding pressure, at least one intermediate expansion stage at an intermediate moulding pressure, and a final expansion stage at a high moulding pressure, in turn, to expand the parison and thereby produce a moulded article conforming to the internal shape of the mould cavity,
***characterised in that***
the increase in pressure (73, 74, 75, 76) during each of the said expansion stages is arranged to take place in a stepwise manner.

2. Apparatus according to Claim 1 which includes
- a low pressure accumulator containing air at a low moulding pressure for use in the first expansion stage;
- at least one intermediate accumulator containing air at an intermediate pressure for use in the or each intermediate expansion stage;
and
- a high pressure accumulator containing air at a high moulding pressure for use in the final expansion stage.

3. Apparatus according to Claim 2 in which the capacity of each of the accumulators is at least a multiple of times greater than the volume of the mould cavity.

4. Apparatus according to Claim 2 or 3 which includes valve means for selectively controlling communication between each of the accumulators and the mould cavity.

5. Apparatus according to any of Claims 2 to 4 in which the control means is arranged, during a recovery phase, to sequentially admit pressurised air from the mould cavity to the intermediate and low pressure accumulators in turn to reduce the air pressures in the mould cavity in a stepwise manner.

6. Apparatus according to any of Claims 2 to 5 in which each of the accumulators is fed with compressed air by a respective compressor.

7. A process for blow moulding articles from thermoplastic material, which includes:
- introducing a parison (4) of thermoplastic material into a mould (2) defining a mould cavity (3);
- heating the parison to an expandable condition;
and
- in an expansion phase, sequentially admitting air to the mould cavity in a first expansion stage at a low moulding pressure, at least one intermediate expansion stage at an intermediate moulding pressure, and a final expansion stage at a high moulding pressure, in turn, to expand the parison and thereby produce a moulded article conforming to the internal shape of the mould cavity,
***characterised in that***
the increase in pressure (73, 74, 75, 76) during each of the said expansion stages is arranged to take place in a stepwise manner.

8. A process according to Claim 7 in which the expansion phase includes operating valve means to sequentially admit air to the mould cavity from a low pressure accumulator containing air at a low moulding pressure, at least one intermediate accumulator containing air at an intermediate moulding pressure, and a high pressure accumulator containing air at a high moulding pressure, in turn.

9. A process according to Claim 8 which includes, in the expansion phase, producing said stepwise expansion of the parison by:
- operating the valve means to selectively admit air from the low pressure accumulator and then operating the valve means to close the low pressure accumulator;
- for the or each intermediate accumulator, operating the valve means to selectively admit air from said intermediate accumulator and then operating the valve means to close the intermediate accumulator;
and
- operating the valve means to selectively admit air from the high pressure accumulator and then operating the valve means to close the high pressure accumulator.

10. Apparatus according to Claim 8 or 9 which includes, in a recovery phase, operating the valve means to sequentially admit pressurised air from the mould cavity to the intermediate and low pressure accumulators, in turn, to reduce the air pressures in the mould cavity in a stepwise manner.

11. A process according to Claim 10 which includes, in the recovery phase, reducing the air pressure in the mould cavity by:
- for the or each intermediate accumulator, operating the valve means to selectively admit air from the mould cavity to said intermediate accumulator and then operating the valve means to close the intermediate accumulator,
and
- operating the valve means to selectively admit air from the mould cavity to the low pressure accumulator and then operating the valve means to close the low pressure accumulator.

12. Apparatus according to any of Claims 8 to 11 in which the capacity of each of the accumulators is at least a multiple of times greater than the volume of the mould cavity.

13. A process according to any of Claims 8 to 12 which includes operating the valve means to open the mould cavity to atmosphere, opening the mould cavity, and removing the moulded article from the mould cavity

14. A process according to any of Claims 8 to 13 which includes supplying compressed air to the high pressure accumulator only, to replenish the air which is supplied to the mould cavity during the expansion phase.

15. A process according to any of Claims 8 to 14 in which, during initial pressurisation of the accumulators, air is supplied to each of the accumulators by a respective compressor.
